# FASCICULE DE BREVET EUROPEEN

(11) **EP 4 036 313 B1**
(45) Date de publication et mention de la délivrance du brevet: **19.07.2023**
(21) Numéro de dépôt: 21209302.5
(22) Date de dépôt: 19.11.2021
(51) Int. Cl.: E02B 17/02, F03D 9/19, F17C 5/00, F17C 1/00, E02B 17/00

(54) **PROCÉDÉ DE STOCKAGE ET RESTITUTION D'HYDROGÈNE DANS UNE STRUCTURE OFFSHORE GRAVITAIRE ET STRUCTURE GRAVITAIRE ASSOCIÉE**
VERFAHREN ZUR SPEICHERUNG UND ABGABE VON WASSERSTOFF IN EINER OFFSHORE-SCHWERKRAFTGRÜNDUNG UND ENTSPRECHENDE SCHWERKRAFTGRÜNDUNG
METHOD FOR STORING AND REDELIVERING HYDROGEN IN A GRAVITY BASED STRUCTURE AND ASSOCIATED GRAVITY BASED STRUCTURE

(30) Priorité: 01.02.2021 FR 2100949
(43) Date de publication de la demande: 03.08.2022
(73) Titulaire: Nature and People First Holding, 75006 Paris (FR); Inno Biogaz, 01280 Prevessin-Moens (FR)
(72) Inventeur: CHOMETTE, Jean Christophe, 01280 Prevessin-Moens (FR)
(74) Mandataire: Cabinet Beau de Loménie

(56) Documents cités:
- NL-B1- 2 017 797

## Description

### Domaine Technique

La présente invention se rapporte au domaine de l'offshore pétrolier et gazier et elle concerne plus particulièrement le démantèlement et la reconversion des plateformes offshores gravitaires en structures de stockage et de restitution d'hydrogène.

### Technique antérieure

Le document NL 2017797 B1 divulgue un système de conversion d'énergie, comportant une structure gravitaire offshore.

Confronté à l'urgence du dérèglement climatique, de nombreuses initiatives sont prises afin de produire des énergies renouvelables (ENR) et diminuer progressivement l'utilisation des énergies fossiles.

Les ENR sont principalement issues du vent et du soleil, sources de production infinies mais intermittentes. Parmi les ENR, on distingue les fermes éoliennes (ou parcs éoliens) offshores, seules capables de produire des quantités d'énergies considérables sur un espace relativement réduit (une ferme pouvant représenter plusieurs GW), tout en ayant des fonctionnements à plus de 50% de facteur de charge (plus de 4400 h/an équivalent pleine puissance). La grande majorité de ces fermes seront installées au Nord de l'Europe.

Les enjeux énergétiques et environnementaux sont tels qu'il est envisagé une puissance installée d'éoliennes offshores de 130 GW en Europe en 2030, et 250 GW en 2040, ce qui représente une production annuelle de 650 TWh (2030) et 1 250 TWh (2040), soit respectivement 18% et 35% de la consommation de l'énergie électrique annuelle en Europe, tout type de moyen de production confondu (nucléaire, hydraulique, éolien, photovoltaïque, gaz). Lorsqu'une telle puissance sera délivrée, aucun système ne pourra garantir une absorption immédiate de cette énergie. Inversement, lors des pics de consommation, il ne pourra être garanti d'avoir cette puissance disponible puisque entièrement dépendante du vent. Dès lors, l'exigence de gérer au mieux la production et la consommation est indispensable. Les enjeux de stockage qui en découlent sont multiples en terme de temps de recharge / décharge, disponibilités, vecteurs énergétiques, rendements, dangerosité, acceptabilité, etc...

De nombreuses solutions de stockage sont connues et permettent de gérer en partie ces intermittences, notamment à travers des systèmes gravitaires (STEP) et chimiques (batteries).

Par ailleurs, il est connu que produire de l'hydrogène (H2) grâce à l'électrolyse permet de changer de vecteur énergétique. L'hydrogène peut se stocker plus facilement que l'électricité et il peut ensuite être utilisé en remplacement de l'hydrogène issu du vaporeformage des gaz fossiles ou à travers des piles à combustible afin de le convertir à nouveau en électricité, notamment pour des usages de mobilités.

### Exposé de l'invention

La présente invention a donc pour but principal de proposer une solution de stockage d'hydrogène à grande échelle qui puisse répondre à la puissance installée des fermes éoliennes offshores.

Ces buts sont atteints par une structure gravitaire offshore (GBS) comportant une pluralité de cellules de stockage reposant fixement sur le fond marin et regroupées autour d'au moins un pied émergeant au-dessus du niveau de la mer et supportant une plateforme comportant des équipements permettant l'introduction et l'extraction d'un fluide dans l'une au moins des cellules de ladite pluralité de cellules de stockage, caractérisé en ce que le fluide est de l'hydrogène et en ce que les équipements comportent en outre au moins un ensemble de compression/décompression pour amener via une conduite de transfert l'hydrogène à une pression déterminée compatible avec son stockage dans ladite une au moins des cellules et l'en évacuer, ladite une au moins des cellules ayant été préalablement pourvue d'une enveloppe interne rigide ou déformable recouverte, doublée ou formée d'un matériau inerte vis-à-vis de l'hydrogène.

Ainsi, les immenses capacités de stockage d'hydrogène créées en recourant aux structures offshores pétrolières ou gazières en fin de vie permettent de répondre aux enjeux de demain tout en assurant leur reconversion.

Avantageusement, ledit matériau inerte vis-à-vis de l'hydrogène est un polymère à base de polyuréthane, polyéthylène, polypropylène ou similaire.

Selon son mode de réalisation, ladite enveloppe interne rigide est apte à résister à une pression maximale prédéterminée, ou ladite une au moins des cellules comporte un premier orifice relié à ladite conduite de transfert pour l'entrée et la sortie d'hydrogène.

De préférence, ladite une au moins des cellules comporte en outre un deuxième orifice pour l'entrée et la sortie d'un fluide de purge et une vanne pilotable ou non pour autoriser l'introduction ou l'extraction de ce fluide de purge au niveau de ladite une au moins des cellules lors respectivement du déstockage ou du stockage de l'hydrogène.

Avantageusement, ledit fluide de purge peut être de l'eau de mer, de l'eau pure ou un gaz inerte plus lourd que l'hydrogène et ne se mélangeant pas à lui.

Selon un mode de réalisation particulier, ladite une au moins des cellules comporte en outre un autre orifice pour l'entrée et la sortie d'un gaz d'équilibrage pour augmenter ou diminuer la pression dans un espace libre déterminé existant entre l'enveloppe interne déformable et ladite une au moins des cellules, selon l'augmentation ou la diminution simultanée de pression de l'hydrogène dans ladite enveloppe interne déformable.

De préférence, ladite conduite de transfert pour l'amenée et l'évacuation de l'hydrogène au niveau de ladite une au moins des cellules est disposée à l'intérieur de l'une des canalisations existantes assurant initialement le transport des hydrocarbures des équipements à ladite pluralité de cellules de stockage ou faisant fonction de canalisation de service entre ladite plateforme et ladite pluralité de cellules de stockage.

Selon le mode de réalisation envisagé, la structure peut comporter en outre un électrolyseur pour produire de l'hydrogène à partir de l'eau de mer, une pile à combustible pour produire de l'électricité à partir de l'hydrogène, ou une unité de dessalement pour produire de l'eau pure à partir de l'eau de mer.

Avantageusement, ledit au moins un pied renferme au moins une cellule de stockage et la structure constitue une structure offshore pétrolière ou gazière en exploitation ou devenue inactive suite à l'épuisement de son gisement d'hydrocarbures et dont la plateforme a été partiellement ou totalement démantelée.

L'invention concerne aussi un réseau de production, stockage et distribution d'hydrogène comportant au moins une structure gravitaire telle que précitée en outre au moins une éolienne offshore pour produire de l'électricité et un pipeline pour le transport de l'hydrogène sur le continent vers un lieu de distribution d'hydrogène ou depuis un lieu de production d'hydrogène.

De préférence, pour permettre un transport de l'hydrogène à forte concentration, ledit pipeline est chemisé ou comporte une ou plusieurs canalisations internes dédiées.

L'invention concerne encore un procédé de stockage d'hydrogène dans une structure gravitaire offshore comportant une pluralité de cellules de stockage reposant fixement sur le fond marin et regroupées autour d'au moins un pied émergeant au-dessus du niveau de la mer et supportant une plateforme comportant des équipements permettant l'introduction et l'extraction d'hydrogène dans l'une au moins des cellules de ladite pluralité de cellules de stockage, procédé consistant à partir de l'hydrogène disponible au niveau de cette plateforme :
- à comprimer ou décomprimer, au moyen d'un ensemble de compression/décompression, l'hydrogène à une pression déterminée compatible avec son stockage dans ladite une au moins des cellules,
- à transférer l'hydrogène dans ladite au moins une des cellules via une conduite de transfert reliant l'ensemble de compression/décompression à ladite au moins une des cellules, ladite une au moins des cellules ayant été préalablement pourvue d'une enveloppe interne rigide ou déformable recouverte, doublée ou formée d'un matériau inerte vis-à-vis de l'hydrogène, et
- à stocker l'hydrogène dans ladite une au moins des cellules.

Selon le mode de réalisation envisagé, le stockage d'hydrogène est effectué en y chassant un fluide de purge que renferme ladite une au moins des cellules, via une conduite de purge, ou encore, le stockage d'hydrogène est effectué en y augmentant, dans un espace libre déterminé existant entre l'enveloppe interne déformable et ladite une au moins des cellules, la pression d'un gaz d'équilibrage simultanément à l'augmentation de pression de l'hydrogène dans ladite enveloppe interne déformable.

Avantageusement, pour être transféré via ladite conduite de transfert à la pression déterminée compatible avec son stockage dans ladite une au moins des cellules, l'hydrogène disponible est soit produit par un électrolyseur sur la structure gravitaire ou tout autre structure offshore soit acheminé par bateau depuis un lieu de production ou par un pipeline depuis le continent et comprimé ou décomprimé à ladite pression déterminée par l'ensemble de compression/décompression.

De préférence, ladite pression déterminée est comprise entre 1 et 1000 bars.

Selon le mode de réalisation considéré, le fluide de purge est soit de l'eau de mer et la conduite de purge est en prise directe avec le milieu marin extérieur à ladite une au moins des cellules via une vanne pilotable ou non, soit de l'air comprimé ou un gaz inerte plus lourd que l'hydrogène et ne se mélangeant pas à lui, et la conduite de purge est reliée à un réservoir d'air comprimé ou de gaz sous pression via un compresseur/décompresseur, soit de l'eau pure et la conduite de purge est reliée via une vanne pilotable ou non à une autre des cellules de stockage dont la conduite de transfert est reliée à la surface.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 illustre de façon schématique un réseau de production, transport et distribution d'hydrocarbures adapté au traitement de l'hydrogène conformément à l'invention,
[Fig. 2] la figure 2 montre un premier exemple d'une structure gravitaire offshore du réseau de la figure 1,
[Fig. 3] la figure 3 montre en perspective partielle un second exemple d'une structure gravitaire offshore,
[Fig. 4A-4C] les figures 4A à 4C montrent trois exemples de traitement des cellules de stockage d'hydrocarbures pour le stockage d'hydrogène,
[Fig. 5] la figure 5 illustre un premier exemple de stockage et de restitution d'hydrogène dans une des cellules des figures 4A à 4C,
[Fig. 6] la figure 6 illustre un deuxième exemple de stockage et de restitution d'hydrogène dans une des cellules des figures 4A à 4C,
[Fig. 7] la figure 7 illustre un troisième exemple de stockage et de restitution d'hydrogène dans une des cellules des figures 4A à 4C,
[Fig. 8A] la figure 8A illustre un quatrième exemple de stockage et de restitution d'hydrogène dans une paire de cellules des figures 4A à 4C, et
[Fig. 8B] la figure 8B montre l'application de ce quatrième exemple aux cellules de stockage de la structure de la figure 3.

### Description des modes de réalisation

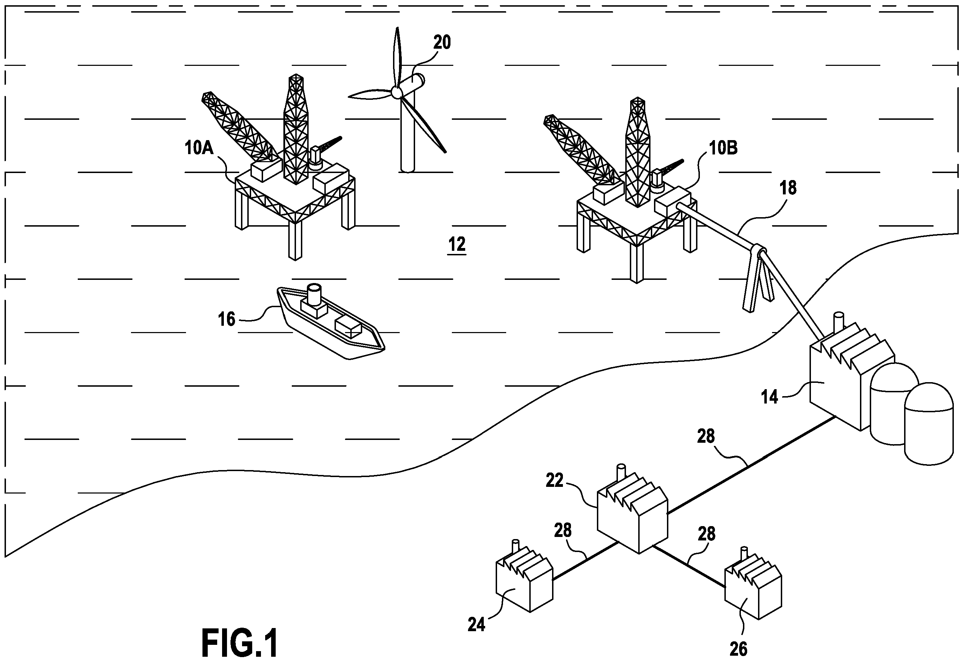

La figure 1 illustre de façon simplifiée un réseau de production, stockage et distribution d'hydrocarbures qui est utilisé conformément à l'invention pour la production, le stockage et la distribution d'hydrogène. Un tel réseau comporte classiquement des structures gravitaires offshores 10A, 10B connues sous l'acronyme GBS (pour « Gravity Based structure ») et ancrées sur le fonds marin 12 au-dessus d'un gisement d'hydrocarbures qui peut être plus ou moins éloigné du continent sur lequel une usine 14 de transformation de ces hydrocarbures (par exemple une raffinerie pour le pétrole brut) est installée. Selon l'emplacement de ces structures offshores, à proximité de la côte ou non, le transport de ces hydrocarbures vers l'usine de transformation peut s'effectuer par bateau 16 ou directement par un pipeline 18 aérien ou sous-marin, oléoduc ou gazoduc selon la nature de l'hydrocarbure soutiré, reliant cette structure gravitaire à l'usine de transformation 14 généralement installée en bord de mer. Les structures gravitaires ayant des besoins électriques sont avantageusement entourées de fermes éoliennes offshores 20 pour produire tout ou partie de l'électricité nécessaire à leur fonctionnement. Sur le continent, le transport des hydrocarbures transformés vers les lieux de distribution 22 puis de consommation ou d'exploitation 24, 26 depuis l'usine de transformation 20 est assuré communément par des pipelines 28 adaptés au type et à la pression du fluide transporté.

De façon générale, les structures gravitaires offshores (GBS) sont de très grandes infrastructures de béton pouvant faire plus de 400 m de haut (parties immergée et émergée) et reposant sur les fonds marins à des profondeurs comprises entre environ 60 et 300 m et typiquement autour de 150m. Emergeant à quelques dizaines de mètres au-dessus du niveau de la mer (typiquement de 20 à 50m), la plateforme supporte des moyens pour pomper les hydrocarbures situés dans les profondeurs de la couche terrestre. Ces hydrocarbures subissent en général une première transformation au niveau de la plateforme pour les débarrasser de divers impuretés avant d'être stockés dans les réservoirs immergés situés au bas de la structure et qui reliés entre eux permettent de constituer des réserves importantes. Chaque réservoir dont la hauteur peut être compris entre 50 et 80 m pour un diamètre de 10 à 35 m pouvant représenter un volume de 4000 à 50 000 m3, les volumes cumulés des réservoirs peuvent ainsi atteindre aisément plusieurs centaines de milliers de m3.

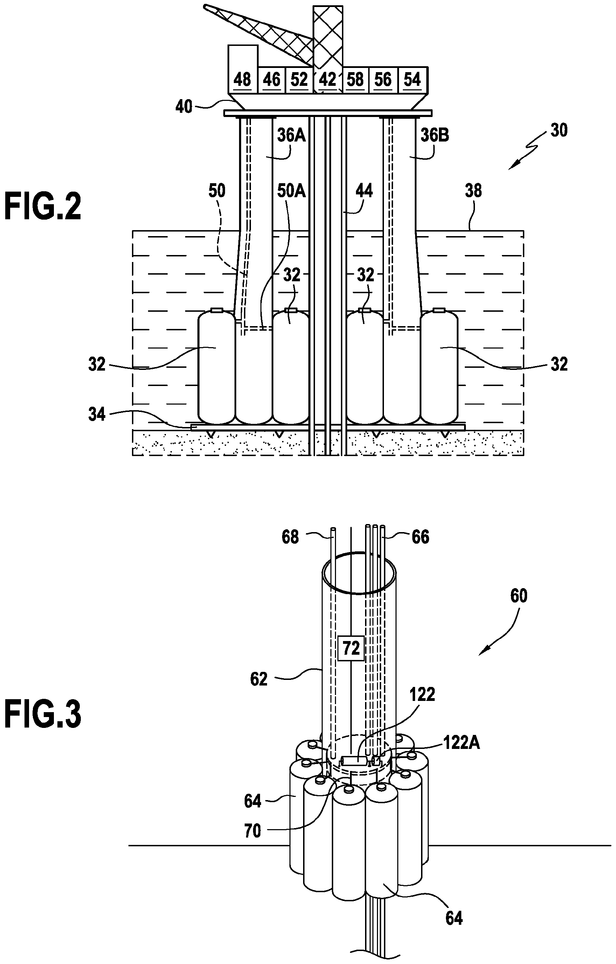

La figure 2 illustre de façon schématique (le schéma n'est pas représentatif des dimensions réelles) un premier exemple d'une structure gravitaire offshore sur laquelle peut être mise en oeuvre l'invention. Une telle structure gravitaire 30 présente couramment dans le domaine de l'offshore pétrolier ou gazier comporte une pluralité de cellules de stockage 32 montées sur une base 34 reposant fixement sur le fond marin, ces cellules étant regroupées autour de plusieurs piliers ou pieds, en l'espèce deux 36A, 36B, émergeant au-dessus du niveau de la mer 38. Ces pieds sont destinés à supporter une plateforme 40 comportant différents équipements assurant l'extraction de pétrole ou d'huile du gisement d'hydrocarbures sur lequel la structure gravitaire repose, sa première transformation et son stockage dans l'une au moins des cellules de stockage 32, avant son transport vers son lieu de transformation et d'exploitation ultérieure. En effet, certaines de ces cellules ne sont pas destinées au stockage des hydrocarbures et peuvent rester inutilisées, ne servant alors que de ballast.

Les équipements montés sur la plateforme comportent au moins un matériel d'extraction 42 disposé à l'extrémité des colonnes d'extraction 44 qui traverse la plateforme et s'enfoncent dans la couche terrestre, un matériel de première transformation ou de traitement des hydrocarbures 46 et une base-vie 48 pour les personnels intervenant sur la plateforme. Une canalisation principale 50 et des canalisations auxiliaires 50A assurent le transfert des hydrocarbures depuis la plateforme vers les différentes cellules de stockage et vice et versa. Les autres canalisations de service existantes assurant essentiellement le transport des fluides de commande de différents équipements (eau, air, etc...) ne sont pas représentées dans un souci de simplification de la figure.

Dans le cadre de l'invention, cette plateforme 40 comporte en outre un ensemble de compression-décompression 52 pour amener via une conduite de transfert appropriée l'hydrogène à une pression déterminée compatible avec son stockage dans les cellules de stockage 32 et l'en évacuer de préférence par cette même conduite. Elle peut aussi recevoir en outre une unité de dessalement 54 pour produire de l'eau pure à partir de l'eau de mer, cette unité de dessalement alimentant un électrolyseur 56 pour produire de l'hydrogène, et une pile à combustible 58 pour produire de l'électricité à partir de l'hydrogène. On notera également que cette plateforme, lorsqu'elle n'est plus en exploitation, pourra avoir été partiellement ou totalement démantelée suite à l'épuisement du gisement d'hydrocarbures qu'elle surmonte, avec le retrait des différents matériels 42-46 liés au traitement des hydrocarbures et ayant rendu inactive en partie ou en totalité la structure offshore pétrolière ou gazière.

Un second exemple de GBS est illustré partiellement à la figure 3. Cette structure gravitaire 60 ne comporte plus qu'un seul pied central 62 de support de la plateforme (non représentée) portant les équipements d'extraction et autour desquels sont réparties des cellules de stockage 64 ancrée sur le fond marin. Dans cet exemple, les colonnes d'extraction 66 des hydrocarbures passent au travers du pied pour s'étendre de la plateforme jusqu'au gisement, comme la canalisation principale 68 de transport des hydrocarbures traités qui s'éclate en autant de canalisations auxiliaires individuelles 70 qu'il existe de cellules de stockage 64. Comme précédemment, les canalisations de service existantes circulant entre la plateforme et les cellules de stockage ne sont pas représentées pour la lisibilité de la figure. Le pied central comporte également de préférence un ascenseur 72 pour faciliter l'accès aux cellules de stockage par les personnels de maintenance.

Dans le cadre de l'invention, pour qu'une cellule de stockage d'hydrocarbures puisse être utilisée pour stocker de l'hydrogène, il est nécessaire de protéger les surfaces et matériaux à son contact car, l'hydrogène étant corrosif, il pourrait rapidement les dégrader. Deux méthodes de protection de la cellule de stockage sont proposées, la première consistant en un chemisage complet de l'intérieur de la cellule de stockage et la seconde en une insertion d'une enveloppe interne à la cellule, rigide ou déformable, venant doubler sa paroi.

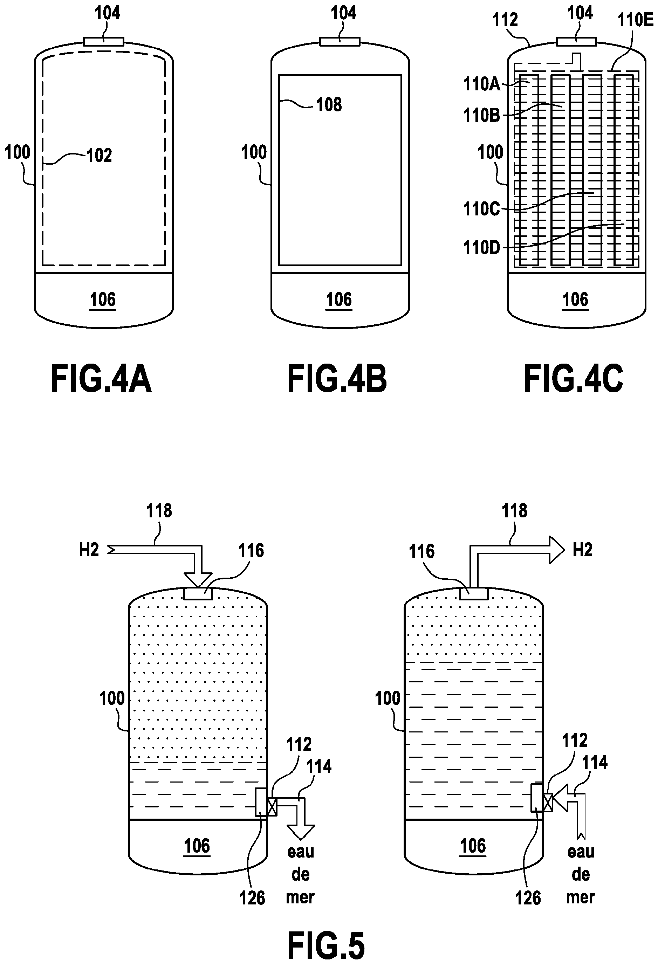

Le chemisage de la cellule de stockage illustré à la figure 4A consiste à appliquer sur la surface interne de la cellule 100 un revêtement 102 de type topcoats ou matériaux composites GRP (pour « Glass Reinforced Plastic ») ou un matériau inerte et passif au contact de l'hydrogène, par exemple un polymère à base de polyuréthane (PU), polyéthylène (PE), polypropylène (PP) ou toutes autres résines aux mêmes propriétés vis à vis de l'hydrogène. Ces revêtements connus en soi peuvent être appliqués par des interventions humaines ou automatiques à l'aide d'un ROV (pour « Remotely Operated underwater Vehicle ») ou de machines à projeter sur les parois qui sont introduits par le couvercle supérieur 104 de la cellule qui est alors retiré avant intervention. La référence 106 correspond à un ballast formé de sable présent au fond de chaque cellule (en partie basse) pour augmenter la stabilité générale de la structure et classiquement séparé du reste de la cellule par une paroi de béton.

L'insertion d'une enveloppe interne peut être effectuée sous deux formes illustrées respectivement aux figures 4B et 4C soit avec une enveloppe déformable 108 qui vient se coller à la surface interne de la cellule 100 ou en reste séparée par un espace déterminé soit sous la forme d'une ou plusieurs enveloppes rigides 110A-110D pouvant toutefois être sous la forme d'un flexible 110E.

Lorsqu'elle est collée à la surface interne de la cellule, l'enveloppe déformable108 n'a pas besoin de résister à des pressions importantes puisque ces dernières seront encaissées par les parois en béton de la cellule de stockage 100. Elle est introduite par le couvercle supérieur 104 de la cellule puis gonflée jusqu'à venir se plaquer sur sa surface interne (une pression minimum est ensuite maintenue afin que cette enveloppe ne bouge plus et reste solidaire définitivement de la cellule). Lorsqu'elle est séparée de la surface interne, elle est avantageusement formée d'une baudruche constituée d'un tissu assurant alors la tenue mécanique de l'enveloppe. Comme pour le chemisage, cette enveloppe doit être traitée intérieurement pour qu'elle soit neutre par rapport à l'hydrogène et extérieurement elle est avantageusement recouverte d'un polymère d'enduction assurant une étanchéité et une résistance à l'abrasion.

Au contraire, le ou les enveloppes rigides 110A - 110E qui constituent une seconde enveloppe indépendante de la cellule de stockage mais intégrées à cette dernière (à l'image des ballonnets d'un dirigeable) sont directement soumises à la pression de l'hydrogène qu'elles renferment et dès lors peuvent autoriser le stockage de l'hydrogène à des pressions bien supérieures (typiquement pouvant aller jusqu'à 1000 bars) à celles que pourrait supporter la seule cellule en béton, augmentant ainsi la capacité de stockage de la GBS. Ce ou ces réservoirs intérieurs peuvent selon leur diamètre être insérés dans la cellule de stockage par son couvercle supérieur 104 ou par le dessus, après découpe de son dôme supérieur 112 à un diamètre correspondant au moins au réservoir à insérer, puis remise en place de ce dernier une fois l'intervention terminée. Dans une réalisation avantageuse, ce réservoir intérieur rigide est un simple flexible non déformable 110E d'un diamètre de quelques centimètres ou dizaines de centimètres qui vient se lover dans les cellules. Avec un rayon de courbure de l'ordre du mètre, il est possible de l'introduire d'un seul tenant ou en plusieurs fois au travers du couvercle supérieur 104 sans procéder à aucune découpe du dôme supérieur 112.

Différents procédés peuvent être envisagés pour effectuer le stockage et la restitution de l'hydrogène dans les cellules de stockage ainsi protégées.

Selon un premier procédé illustré à la figure 5 et utilisant l'eau de mer comme fluide de purge ou de chasse, il est proposé que l'hydrogène (représenté par les points) partage la cellule de stockage 100 préalablement chemisée ou pourvue de son enveloppe interne déformable plaquée sur sa paroi interne ou de son enveloppe interne rigide, avec l'eau de mer (représenté par des hachures).

L'hydrogène est amené aux cellules à une pression déterminée compatible avec son stockage et évacué de celles-ci par la conduite de transfert qui est avantageusement formée par la canalisation principale 50, 68 et les canalisations auxiliaires 50A, 70 existantes reliant ces cellules à la plateforme ou par des canalisations spécifiques dédiées pouvant être installées dans ou hors de ces canalisations. En effet, les canalisations de transport des hydrocarbures ont couramment des diamètres de plusieurs dizaines de cm alors qu'un diamètre de quelques cm est suffisant pour le transport de l'hydrogène. Les canalisations de service peuvent également être utilisées et, si nécessaire, les canalisations existantes sont chemisées à l'aide d'un matériau inerte par rapport à l'hydrogène, comme celui tapissant les cellules.

Ainsi, lorsque la période est en surplus de production d'énergie, les électrolyseurs produisent de l'hydrogène (H2) qui est stocké dans les cellules, l'eau de mer étant refoulée à l'extérieur de la cellule au travers d'une vanne pilotable ou non 112 via une conduite de purge 114 et remplacée au fur et à mesure par l'hydrogène provenant de la conduite de transfert 118 (si nécessaire une petite turbine réversible peut aussi être utilisée pour aspirer l'eau hors de la cellule). L'hydrogène est introduit dans la cellule par un premier orifice d'entrée-sortie 116 où aboutit la conduite de transfert et le fluide de purge par un deuxième orifice d'entrée-sortie 126 où aboutit la conduite de purge. Les électrolyseurs produisant de l'hydrogène à des pressions de 25-30 bars, une décompression a lieu avant le stockage au niveau du module de compression-décompression 52 si les cellules ne sont pas en mesure de supporter cette pression ou au contraire une compression si ces cellules le peuvent. Lors de la restitution de l'hydrogène (déstockage), l'eau de mer vient au travers de la vanne 112 remplacer l'hydrogène de manière naturelle sous l'effet du différentiel de pression. Cependant, compte tenu de la non homogénéité de l'eau de mer à chaque remplissage, des variations de T° et des dépôts de sédiments durant les cycles successifs de stockage et déstockage, on veillera à minimiser les problèmes d'exploitation avec un suivi particulier de la composition de l'hydrogène au niveau de l'unité de traitement 46.

Avant transfert vers le pipeline, l'hydrogène est comprimé ou décomprimé (selon la pression de stockage dans les cellules) par le module de compression-décompression 52 pour atteindre une pression compatible à celle de ce pipeline (qui peut être comprise entre 40 et 120 bars). Il est ensuite injecté et dirigé sur son lieu d'utilisation ou éventuellement mélangé à faible concentration au gaz fossile lorsque le prélèvement de celui-ci est encore possible.

En effet, l'hydrogène peut en principe être directement injecté dans les pipelines acheminant les gaz fossiles sur le continent jusqu'à des ratios de 6% à 10% (selon le type de conduite en exploitation) sans modifications de ces conduites et avec des modifications mineures pour obtenir des mélanges jusqu'à 20%. Au-delà de ce ratio, c'est-à-dire à forte concentration, ce n'est pas envisageable. L'invention propose donc de recourir à des conduites dédiées qui pourront être insérées dans les conduites existantes ou de modifier les conduites existantes en réalisant un chemisage intérieur des pipelines comme celui effectué pour les cellules de stockage.

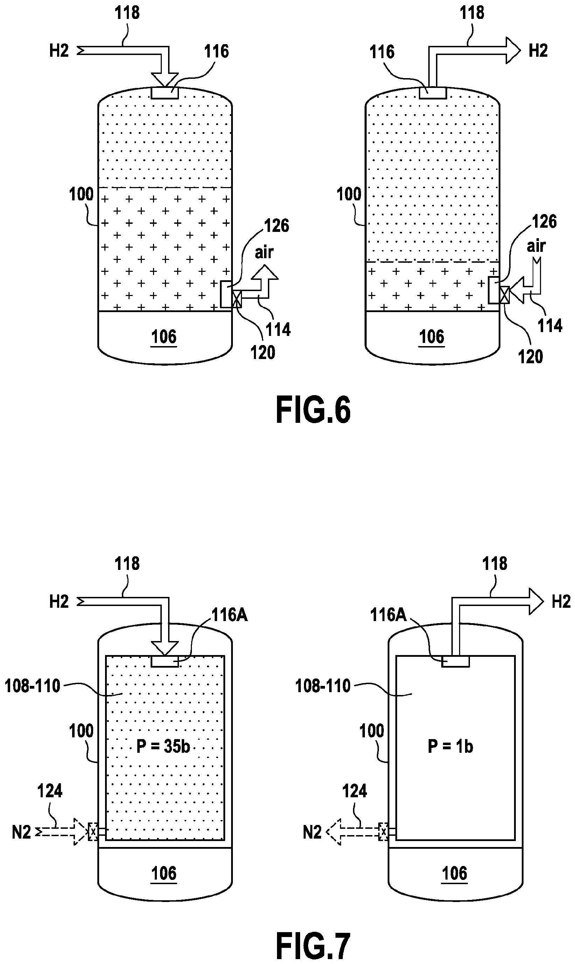

Un deuxième procédé de stockage-déstockage est illustré à la figure 6. Il utilise l'air (illustré par des croix) pour effectuer la purge de la cellule 100 préalablement chemisée ou pourvue de son enveloppe interne déformable ou rigide. En effet, l'hydrogène étant la molécule la plus légère, lors du remplissage de la cellule pour le stockage de l'hydrogène par son premier orifice d'entrée-sortie 116 depuis la conduite de transfert 118, ce dernier se trouvera naturellement en haut de la cellule sans se mélanger avec l'air qui sera évacué dans la conduite de purge 114 au travers d'une vanne pilotable 120 ou non, disposée au niveau du deuxième orifice d'entrée-sortie 126 et associée si nécessaire à un compresseur d'air (non représenté). Pour améliorer le va et viens, l'air dont l'homogénéité ne peut être garantie, peut avantageusement être remplacé par un gaz inerte homogène plus lourd que l'hydrogène et ne se mélangeant pas avec lui. Via un compresseur/décompresseur 122A, ce gaz peut être stocké à très grande pression (typiquement plusieurs centaines de bars) dans un réservoir de gaz approprié 122 disposé au plus près des cellules comme illustré à la figure 3 (voire dans une cellule non utilisée) ou au niveau de la plateforme utilisant de fait un faible volume en regard du volume qu'il occuperait dans la cellule. La pression toujours constante (ou variant peu) qui en résulterait à l'intérieur de la cellule faciliterait le maintien de l'enveloppe interne (doublure ou liner PU) sur les parois béton de la cellule en cas de gonflage comme de l'adhésion du revêtement PU à ces parois béton en cas de projection.

Dans le troisième procédé illustré à la figure 7, c'est uniquement un jeu de pression qui vient remplir ou vider le réservoir déformable 108 ou rigide 110 disposé dans la cellule de stockage 100 et alternativement à haute et basse pression. En effet, lors de la phase de stockage, le réservoir est au travers de son premier orifice d'entrée-sortie 116A faisant fonction de vanne, rempli par l'hydrogène préalablement compressé ou décompressé à une pression déterminée dans l'ensemble de compression-décompression 52 et compatible avec la tenue en pression du réservoir, et lors de la phase de déstockage, le réservoir est vidé de cet hydrogène sous pression de préférence par ce même premier orifice d'entrée-sortie comme illustré et se retrouve alors à une pression très basse, typiquement la pression atmosphérique.

Dans le cas d'un réservoir rigide, le réservoir doit bien entendu être suffisamment rigide pour pouvoir supporter les variations de pression entre ces deux phases de stockage et déstockage. Ainsi, par exemple, si la pression de stockage dans le réservoir est de 35 bars, l'hydrogène sera compressé s'il provient de l'électrolyseur dont la pression de sortie est typiquement de 25 à 30 bars ou décompressé s'il provient directement du pipeline où la pression est de l'ordre 40 à 120 bars. Vide il sera à la pression atmosphérique et la différence de pression qu'il devra supporter sera donc de 34 bars.

Par contre, dans le cas d'un réservoir déformable tel que la baudruche précitée qui aura été gonflée jusqu'à atteindre une forme déployée correspondant, à un espace vide déterminé près la protégeant d'un contact avec la paroi de la cellule, au volume libre de la cellule de stockage, il en ira différemment, car le matériau qui la constitue (typiquement un simple revêtement polymère) ne lui permet pas de résister à un tel différentiel de pression. C'est pourquoi, il est prévu d'introduire dans la cellule de stockage 100 par une conduite appropriée 124 un gaz d'équilibrage, typiquement de l'azote N2, qui permettra de maintenir constamment une même pression à l'intérieur de la baudruche et à l'extérieur de celle-ci, c'est-à-dire dans l'espace libre existant, large de quelques centimètres, séparant cette baudruche de la paroi interne de la cellule. Ainsi, lors des phases de stockage de l'énergie, on vient augmenter la pression de l'hydrogène dans la baudruche et, dans le même temps et de manière strictement linéaire, on augmente la pression du gaz d'équilibrage dans cet espace libre. Inversement, lors des phases de déstockage, on libère l'hydrogène contenu dans la baudruche tout en libérant l'azote afin de garder les pressions strictement identiques (iso pression). Les pressions baissant de manière simultanée, le volume de la baudruche reste identique et la baudruche peut ainsi garder sa forme déployée initiale.

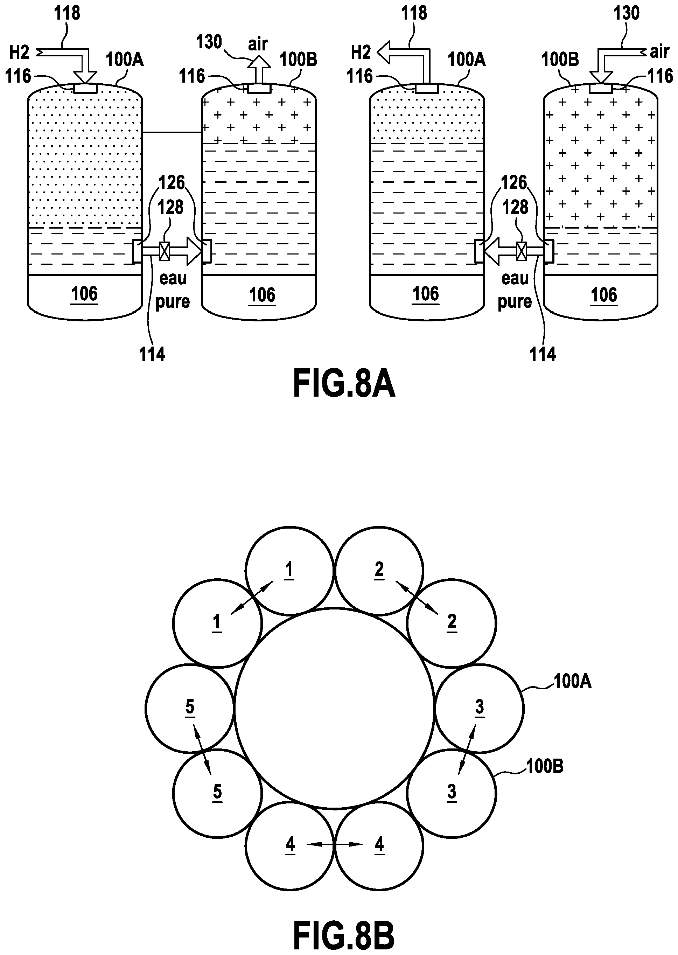

Enfin, selon un quatrième procédé illustré aux figures 8A et 8B utilisant de l'eau pure comme fluide de chasse, cette eau pure étant obtenue à partir de l'unité de dessalement de l'eau de mer 54 installée préférentiellement directement sur la plateforme (l'eau pure peut aussi simplement être livrée sur la plateforme), il est proposé que l'hydrogène soit stocké dans une cellule 100A comportant un chemisage (voire pourvue d'une enveloppe interne déformable plaquée contre sa paroi interne ou d'une enveloppe interne rigide) comme décrit précédemment, de deux cellules 100A, 100B en communication mutuelle, la seconde cellule 100B ne nécessitant par contre pas de traitement particulier de sa surface interne.

En effet, la première cellule 100A va alternativement et simultanément être remplie d'hydrogène puis d'eau pure alors que l'autre 100B va alternativement et simultanément être remplie d'eau pure puis d'air amené depuis la surface si nécessaire via un compresseur d'air (non représenté) par une conduite appropriée 130 au premier orifice d'entrée-sortie 116. L'eau pure qui est un fluide homogène et facile à remplacer est ainsi utilisée en boucle fermée entre les deux cellules. Il n'y a pas d'interaction chimique avec l'hydrogène et les cellules peuvent donc être gardées toujours à la même pression, une vanne pilotable ou non 128 (à laquelle peut aussi être adjoint une petite turbine réversible) montée sur la conduite de purge 114 reliant les deux cellules entre leur deuxièmes orifices d'entrée-sortie 126 et basculant l'eau dans un sens puis dans l'autre chassant l'hydrogène et l'air.

On notera que ce procédé nécessite d'utiliser deux cellules pour un volume d'hydrogène stocké. Toutefois, étant donné la quantité de cellules disponibles dans les GBS, cette particularité n'apparait pas une limitation au recours à ce quatrième procédé de stockage-déstockage d'hydrogène dans ces cellules.

En effet, si l'on prend à titre d'exemple une GBS comportant seize cellules (par exemple celle connue sous l'appellation BRENT BRAVO ou BRENT DELTA) dont six couples de cellules représentant un volume de 97139 m3 sont utilisées, on obtient les quantités d'énergie déjà très importantes suivantes selon la pression exploitée, soit 2.8GWh (84Tonnes de H2) pour 1 bar, 25GWh (748T de H2) pour 100 bars ou encore 102.74GWh (3085T de H2) pour 500 bars.

On comprend alors aisément qu'avec une GBS de taille plus importante comme la STATFJORD, on peut atteindre des quantités d'énergie stockée considérables.

Ainsi, le stockage en mer de l'hydrogène selon l'invention apporte bien des avantages aux solutions actuelles de stockage et notamment il permet un délestage des réseaux électriques terrestres ou une utilisation sur la plateforme elle-même.

Lorsque le réseau terrestre est saturé ou qu'il est sous dimensionné pour transporter la quantité d'énergie produite par les fermes éoliennes, l'énergie électrique qui ne peut être consommée en temps réel est alors transformée en hydrogène via les électrolyseurs de la plateforme et stockée sur celle-ci pour une consommation sous une forme différente ou ultérieure. De même, lorsque l'énergie électrique n'est pas suffisamment chère à un instant t et que les prévisions à 1-3 jours donnent des perspectives économiques plus intéressantes (par exemple au moins 3 fois plus chères pour couvrir les pertes de rendement), il devient possible de stocker l'hydrogène sur la plateforme pour un décalage de la livraison de l'énergie sur le réseau électrique terrestre.

## Revendications

1. Structure gravitaire offshore (GBS) comportant une pluralité de cellules de stockage (32) reposant fixement sur le fond marin et regroupées autour d'au moins un pied (62) émergeant au-dessus du niveau de la mer (38) et supportant une plateforme (40) comportant des équipements (42) permettant l'introduction et l'extraction d'un fluide dans l'une au moins des cellules de ladite pluralité de cellules de stockage, **caractérisé en ce que** le fluide est de l'hydrogène et **en ce que** les équipements comportent en outre au moins un ensemble de compression/décompression (52) pour amener via une conduite de transfert (118) l'hydrogène à une pression déterminée compatible avec son stockage dans ladite une au moins des cellules et l'en évacuer, ladite une au moins des cellules ayant été préalablement pourvue d'une enveloppe interne rigide (110 ; 110A, 110B, 110C, 110D) ou déformable (108) recouverte, doublée ou formée d'un matériau inerte vis-à-vis de l'hydrogène.

2. Structure gravitaire selon la revendication 1, **caractérisée en ce que** ledit matériau inerte vis-à-vis de l'hydrogène est un polymère à base de polyuréthane, polyéthylène, polypropylène ou similaire.

3. Structure gravitaire selon la revendication 1, **caractérisée en ce que** ladite enveloppe interne rigide (110 ; 110A, 110B, 110C, 110D) est apte à résister à une pression maximale prédéterminée.

4. Structure gravitaire selon la revendication 1, **caractérisée en ce que** ladite une au moins des cellules comporte un premier orifice (116) relié à ladite conduite de transfert pour l'entrée et la sortie d'hydrogène.

5. Structure gravitaire selon la revendication 4, **caractérisée en ce que** ladite une au moins des cellules comporte en outre un deuxième orifice (126) pour l'entrée et la sortie d'un fluide de purge et une vanne pilotable (112) pour autoriser l'introduction ou l'extraction de ce fluide de purge au niveau de ladite une au moins des cellules lors respectivement du déstockage ou du stockage de l'hydrogène.

6. Structure gravitaire selon la revendication 5, **caractérisée en ce que** ledit fluide de purge est de l'eau de mer, de l'eau pure ou un gaz inerte plus lourd que l'hydrogène et ne se mélangeant pas à lui.

7. Structure gravitaire selon la revendication 6, **caractérisée en ce que** ladite une au moins des cellules comporte en outre un autre orifice pour l'entrée et la sortie d'un gaz d'équilibrage pour augmenter ou diminuer la pression dans un espace libre déterminé existant entre l'enveloppe interne déformable (108) et ladite une au moins des cellules, selon l'augmentation ou la diminution simultanée de pression de l'hydrogène dans ladite enveloppe interne déformable.

8. Structure gravitaire selon la revendication 1, **caractérisée en ce que** ladite conduite de transfert (118) pour l'amenée et l'évacuation de l'hydrogène au niveau de ladite une au moins des cellules est disposée à l'intérieur de l'une des canalisations existantes (50, 68 ; 50A, 70) assurant initialement le transport des hydrocarbures des équipements à ladite pluralité de cellules de stockage ou faisant fonction de canalisation de service entre ladite plateforme et ladite pluralité de cellules de stockage.

9. Structure gravitaire selon la revendication 1, **caractérisée en ce que** ledit au moins un pied renferme au moins une cellule de stockage.

10. Structure gravitaire selon l'une quelconque des revendications 1 à 9, **caractérisée en ce qu'**elle constitue une structure offshore pétrolière ou gazière (10A, 10B) en exploitation ou devenue inactive suite à l'épuisement de son gisement d'hydrocarbures et dont la plateforme (40) a été partiellement ou totalement démantelée.

11. Réseau de production, stockage et distribution d'hydrogène comportant au moins une structure gravitaire (GBS) selon l'une quelconque des revendications 1 à 10 pour le stockage d'hydrogène, **caractérisé en ce qu'**il comporte en outre au moins une éolienne offshore (20) pour produire de l'électricité et un pipeline (18, 28) pour le transport de l'hydrogène sur le continent vers un lieu de distribution d'hydrogène ou depuis un lieu de production d'hydrogène.

12. Réseau selon la revendication 11, **caractérisé en ce que**, pour permettre un transport de l'hydrogène à forte concentration, ledit pipeline est chemisé ou comporte une ou plusieurs canalisations internes dédiées.

13. Procédé de stockage d'hydrogène dans une structure gravitaire offshore (10A, 10B) comportant une pluralité de cellules de stockage (32) reposant fixement sur le fond marin (12) et regroupées autour d'au moins un pied (62) émergeant au-dessus du niveau de la mer (38) et supportant une plateforme (40) comportant des équipements (42) permettant l'introduction et l'extraction d'hydrogène dans l'une au moins des cellules de ladite pluralité de cellules de stockage, procédé consistant à partir de l'hydrogène disponible au niveau de cette plateforme :
. à comprimer ou décomprimer, au moyen d'un ensemble de compression/décompression (52), l'hydrogène à une pression déterminée compatible avec son stockage dans ladite une au moins des cellules ;
. à transférer l'hydrogène dans ladite au moins une des cellules via une conduite de transfert (118) reliant l'ensemble de compression/décompression à ladite au moins une des cellules, ladite une au moins des cellules ayant été préalablement pourvue d'une enveloppe interne rigide (110 ; 110A, 110B, 110C, 110D) ou déformable (108) recouverte, doublée ou formée d'un matériau inerte vis-à-vis de l'hydrogène ; et
. à stocker l'hydrogène dans ladite une au moins des cellules.

14. Procédé de stockage d'hydrogène selon la revendication 13, **caractérisé en ce que** le stockage d'hydrogène est effectué en y chassant un fluide de purge que renferme ladite une au moins des cellules, via une conduite de purge (114).

15. Procédé de stockage d'hydrogène selon la revendication 13, **caractérisé en ce que** le stockage d'hydrogène est effectué en y augmentant, dans un espace libre déterminé existant entre l'enveloppe interne déformable (108) et ladite une au moins des cellules, la pression d'un gaz d'équilibrage simultanément à l'augmentation de pression de l'hydrogène dans ladite enveloppe interne déformable.

16. Procédé de stockage d'hydrogène selon la revendication 13, **caractérisé en ce que** pour être transféré via ladite conduite de transfert à la pression déterminée compatible avec son stockage dans ladite une au moins des cellules, l'hydrogène disponible est soit produit par un électrolyseur (56) sur la structure gravitaire ou tout autre structure offshore soit acheminé par bateau (16) depuis un lieu de production ou par un pipeline(18) depuis le continent et comprimé ou décomprimé à ladite pression déterminée par l'ensemble de compression/décompression (52).

17. Procédé de stockage d'hydrogène selon la revendication 13, **caractérisé en ce que** ladite pression déterminée est comprise entre 1 et 1000 bars.

18. Procédé de stockage d'hydrogène selon la revendication 14, **caractérisé en ce que** le fluide de purge est de l'eau de mer et la conduite de purge (114) est en prise directe avec le milieu marin extérieur à ladite une au moins des cellules via une vanne pilotable ou non (112).

19. Procédé de stockage d'hydrogène selon la revendication 14, **caractérisé en ce que** le fluide de purge est de l'air comprimé ou un gaz inerte plus lourd que l'hydrogène et ne se mélangeant pas à lui, et la conduite de purge (114) est reliée à un réservoir (122) d'air comprimé ou de gaz sous pression via un compresseur/décompresseur.

20. Procédé de stockage d'hydrogène selon la revendication 14, **caractérisé en ce que** le fluide de purge est de l'eau pure et la conduite de purge (114) est reliée via une vanne pilotable ou non (112) à une autre des cellules de stockage dont la conduite de transfert (116) est reliée à la surface.

## Patentansprüche

1. Offshore-Schwerkraftgründung (GBS), die mehrere Speicherzellen (32) beinhaltet, die fest auf dem Meeresboden aufliegen und um mindestens einen Fuß (62) gruppiert sind, der über den Meeresspiegel (38) ragt und eine Plattform (40) trägt, die Ausrüstung (42) beinhaltet, die den Eintrag und Austrag eines Fluids in der mindestens einen der Zellen der mehreren Speicherzellen ermöglicht, **dadurch gekennzeichnet, dass** es sich bei dem Fluid um Wasserstoff handelt und dass die Ausrüstung ferner mindestens eine Kompressions-/Dekompressionsanordnung (52) beinhaltet, um den Wasserstoff über eine Transferleitung (118) auf einen bestimmen Druck zu bringen, der mit seiner Speicherung in der mindestens einen der Zellen vereinbar ist, und daraus zu entleeren, wobei die mindestens eine der Zellen zuvor mit einer starren inneren Hülle (110; 110A, 110B, 110C, 110D) oder einer verformbaren inneren Hülle (108) versehen wurde, die mit einem gegenüber Wasserstoff inerten Material beschichtet, verkleidet oder daraus gebildet ist.

2. Schwerkraftgründung nach Anspruch 1, **dadurch gekennzeichnet, dass** das gegenüber Wasserstoff inerte Material ein Polymer auf Basis von Polyurethan, Polyethylen, Polypropylen oder dergleichen ist.

3. Schwerkraftgründung nach Anspruch 1, **dadurch gekennzeichnet, dass** die starre innere Hülle (110; 110A, 110B, 110C, 110D) dazu geeignet ist, einem vorbestimmten maximalen Druck standzuhalten.

4. Schwerkraftgründung nach Anspruch 1, **dadurch gekennzeichnet, dass** die mindestens eine der Zellen eine erste Öffnung (116) beinhaltet, die mit der Transferleitung zum Einlass und Auslass von Wasserstoff verbunden ist.

5. Schwerkraftgründung nach Anspruch 4, **dadurch gekennzeichnet, dass** die mindestens eine der Zellen ferner eine zweite Öffnung (126) zum Einlass und Auslass eines Spülfluids und ein steuerbares Ventil (112), um den Eintrag und Austrag dieses Spülfluids auf Ebene der mindestens einen der Zellen während der Entnahme bzw. Speicherung des Wasserstoffs zu gestatten, beinhaltet.

6. Schwerkraftgründung nach Anspruch 5, **dadurch gekennzeichnet, dass** es sich bei dem Spülfluid um Meerwasser, Reinwasser oder ein inertes Gas handelt, das schwerer als Wasserstoff ist und sich nicht damit mischt.

7. Schwerkraftgründung nach Anspruch 6, **dadurch gekennzeichnet, dass** die mindestens eine der Zellen ferner eine weitere Öffnung zum Einlass und Auslass eines Ausgleichgases beinhaltet, um den Druck in einem zwischen der verformbaren inneren Hülle (108) und der mindestens einen der Zellen vorhandenen bestimmten Freiraum gemäß der gleichzeitigen Steigerung oder Senkung des Drucks des Wasserstoffes in der verformbaren inneren Hülle zu steigern oder zu senken.

8. Schwerkraftgründung nach Anspruch 1, **dadurch gekennzeichnet, dass** die Transferleitung (118) zur Zuführung und Abführung des Wasserstoffs auf Ebene der mindestens einen der Zellen im Inneren eines von bestehenden Kanälen (50, 68; 50A, 70) angeordnet ist, die ursprünglich den Transport von Kohlenwasserstoffen von der Ausrüstung zu den mehreren Speicherzellen sicherstellten oder als Versorgungskanal zwischen der Plattform und den mehreren Speicherzellen dienten.

9. Schwerkraftgründung nach Anspruch 1, **dadurch gekennzeichnet, dass** der mindestens eine Fuß mindestens eine Speicherzelle enthält.

10. Schwerkraftgründung nach einem der Ansprüche 1 bis 9, **dadurch gekennzeichnet, dass** sie eine Offshore-Erdöl- oder -Gasstruktur (10A, 10B) darstellt, die in Betrieb ist oder infolge der Erschöpfung ihrer Kohlenwasserstofflagerstätte inaktiv geworden ist und deren Plattform (40) teilweise oder ganz abgebaut wurde.

11. Erzeugungs-, Speicher- und Verteilungsnetz für Wasserstoff, das mindestens eine Schwerkraftgründung (GBS) nach einem der Ansprüche 1 bis 10 zur Speicherung von Wasserstoff beinhaltet, **dadurch gekennzeichnet, dass** es ferner mindestens eine Offshore-Windkraftanlage (20) zum Erzeugen von Elektrizität und eine Rohrleitung (18, 28) zum Transport von Wasserstoff über Land an einen Wasserstoffverteilungsort oder von einem Wasserstofferzeugungsort beinhaltet.

12. Netz nach Anspruch 11, **dadurch gekennzeichnet, dass**, um einen Transport von hochkonzentriertem Wasserstoff zu ermöglichen, die Rohrleitung verkleidet ist oder einen oder mehrere spezielle interne Kanäle beinhaltet.

13. Verfahren zur Speicherung von Wasserstoff in einer Offshore-Schwerkraftgründung (10A, 10B), die mehrere Speicherzellen (32) beinhaltet, die fest auf dem Meeresboden (12) aufliegen und um mindestens einen Fuß (62) gruppiert sind, der über den Meeresspiegel (38) ragt und eine Plattform (40) trägt, die Ausrüstung (42) beinhaltet, welche den Eintrag und Austrag von Wasserstoff in der mindestens einen der Zellen der mehreren Speicherzellen ermöglicht, wobei das Verfahren auf Grundlage von auf Ebene dieser Plattform verfügbarem Wasserstoff besteht aus:
• Komprimieren oder Dekomprimieren, mittels einer Kompressions-/Dekompressionsanordnung (52), von Wasserstoff auf einen bestimmten Druck, der mit seiner Speicherung in der mindestens einen der Zellen vereinbar ist,
• Überführen des Wasserstoffs in die mindestens eine der Zellen über eine Transferleitung (118), welche die Kompressions-/Dekompressionsanordnung mit der mindestens einen der Zellen verbindet, wobei die mindestens eine der Zellen zuvor mit einer starren inneren Hülle (110; 110A, 110B, 110C, 110D) oder einer verformbaren inneren Hülle (108) versehen wurde, die mit einem gegenüber Wasserstoff inerten Material beschichtet, verkleidet oder daraus gebildet ist, und
• Speichern des Wasserstoffs in der mindestens einen der Zellen.

14. Verfahren zur Speicherung von Wasserstoff nach Anspruch 13, **dadurch gekennzeichnet, dass** die Speicherung von Wasserstoff durch Ausspülen desselben mit einem Spülfluid, das in der mindestens einen der Zellen enthalten ist, über eine Spülleitung (114) erfolgt.

15. Verfahren zur Speicherung von Wasserstoff nach Anspruch 13, **dadurch gekennzeichnet, dass** die Speicherung von Wasserstoff durch Steigern, in einem zwischen der verformbaren inneren Hülle (108) und der mindestens einen der Zellen vorhandenen bestimmten Freiraum, des Drucks eines Ausgleichsgases gleichzeitig mit der Steigerung des Drucks des Wasserstoffs in der verformbaren inneren Hülle erfolgt.

16. Verfahren zur Speicherung von Wasserstoff nach Anspruch 13, **dadurch gekennzeichnet, dass**, um über die Transferleitung mit dem bestimmten Druck überführt zu werden, der mit seiner Speicherung in der mindestens einen der Zellen vereinbar ist, der verfügbare Wasserstoff entweder durch eine Elektrolysezelle (56) an der Schwerkraftgründung oder einer beliebigen anderen Offshore-Struktur erzeugt oder per Schiff (16) von einem Erzeugungsort oder über eine Rohrleitung (18) von Land befördert wird und durch die Kompressions-/Dekompressionsanordnung (52) auf den bestimmten Druck komprimiert oder dekomprimiert wird.

17. Verfahren zur Speicherung von Wasserstoff nach Anspruch 13, **dadurch gekennzeichnet, dass** der bestimmte Druck zwischen 1 und 1000 bar liegt.

18. Verfahren zur Speicherung von Wasserstoff nach Anspruch 14, **dadurch gekennzeichnet, dass** es sich bei dem Spülfluid um Meerwasser handelt und die Spülleitung (114) in direkter Verbindung mit der Meeresumgebung außerhalb der mindestens einen der Zellen über ein steuerbares oder nicht steuerbares Ventil (112) steht.

19. Verfahren zur Speicherung von Wasserstoff nach Anspruch 14, **dadurch gekennzeichnet, dass** es sich bei dem Spülfluid um Druckluft oder ein inertes Gas handelt, das schwerer als Wasserstoff ist und sich nicht damit mischt, und die Spülleitung (114) mit einem Behälter (122) für Druckluft oder druckbeaufschlagtes Gas über einen Kompressor/Dekompressor verbunden ist.

20. Verfahren zur Speicherung von Wasserstoff nach Anspruch 14, **dadurch gekennzeichnet, dass** es sich bei dem Spülfluid um Reinwasser handelt und die Spülleitung (114) über ein steuerbares oder nicht steuerbares Ventil (112) mit einer anderen der Speicherzellen verbunden ist, deren Transferleitung (116) mit der Oberfläche verbunden ist.

## Claims

1. Offshore gravity based structure (GBS) comprising a plurality of storage cells (32) resting fixedly on the seabed and grouped around at least one foot (62) emerging above sea level (38) and supporting a platform (40) comprising equipment (42) allowing the introduction and the extraction of a fluid in at least one of the cells of the said plurality of storage cells, **characterized in that** the fluid is hydrogen and **in that** the equipment further comprises at least one compression/decompression assembly (52) for supplying hydrogen via a transfer pipe (118) to a determined pressure compatible with its storage in said at least one of the cells and draining it, said at least one of the cells having been previously provided with a rigid (110; 110A, 110B, 110C, 110D) or deformable (108) internal envelope covered, lined or formed of a material inert with respect to hydrogen.

2. Gravity based structure according to Claim 1, **characterized in that** said material which is inert with respect to hydrogen is a polymer based on polyurethane, polyethylene, polypropylene or the like.

3. Gravity based structure according to Claim 1, **characterized in that** said rigid internal envelope (110; 110A, 110B, 110C, 110D) is capable of resisting a predetermined maximum pressure.

4. Gravity based structure according to Claim 1, **characterized in that** said at least one of the cells comprises a first orifice (116) connected to said transfer pipe for the entry and exit of hydrogen.

5. Gravity based structure according to claim 4, **characterized in that** said at least one of the cells further comprises a second orifice (126) for the entry and exit of a purge fluid and a controllable valve (112) to authorize the introduction or extraction of this purge fluid at the level of said at least one of the cells during the removal or storage of the hydrogen respectively.

6. Gravity based structure according to Claim 5, **characterized in that** said purging fluid is sea water, pure water or an inert gas heavier than hydrogen and not mixing with it.

7. Gravity based structure according to claim 6, **characterized in that** said at least one of the cells further comprises another orifice for the entry and exit of a balance gas to increase or decrease the pressure in a determined free space existing between the deformable internal envelope (108) and said at least one of the cells, depending on the simultaneous increase or decrease in pressure of the hydrogen in said deformable internal envelope.

8. Gravity based structure according to Claim 1, **characterized in that** said transfer pipe (118) for supplying and draining the hydrogen at the level of said at least one of the cells is arranged inside one of the existing pipelines (50, 68; 50A, 70) initially transporting hydrocarbons from the equipment to said plurality of storage cells or acting as a service pipeline between said platform and said plurality of storage cells.

9. Gravity based structure according to Claim 1, **characterized in that** said at least one foot contains at least one storage cell.

10. Gravity based structure according to any one of Claims 1 to 9, **characterized in that** it constitutes an offshore oil or gas structure (10A, 10B) in operation or which has become inactive following the depletion of its hydrocarbon deposit and whose platform (40) has been partially or totally dismantled.

11. Hydrogen production, storage and distribution network comprising at least one gravity based structure (GBS) according to any one of Claims 1 to 10 for the storage of hydrogen, **characterized in that** it further comprises at least one offshore wind turbine (20) for generating electricity and a pipeline (18, 28) for transporting hydrogen on the continent to a hydrogen distribution location or from a hydrogen generation location.

12. Network according to claim 11, **characterized in that**, to allow transport of hydrogen at high concentration, said pipeline is jacketed or comprises one or more dedicated internal pipes.

13. Method for storing hydrogen in an offshore gravity based structure (10A, 10B) comprising a plurality of storage cells (32) fixedly resting on the seabed (12) and grouped around at least one foot (62) emerging above sea level (38) and supporting a platform (40) comprising equipment (42) allowing the introduction and the extraction of hydrogen into at least one of the cells of the said plurality of storage cells, method consisting from the hydrogen available at this platform: in compressing or decompressing, by means of a compression/decompression assembly (52), the hydrogen to a determined pressure compatible with its storage in said at least one of the cells; in transferring hydrogen into said at least one of the cells via a transfer pipe (118) connecting the compression/decompression assembly to said at least one of the cells, said at least one of the cells having been previously provided with a rigid (110; 110A, 110B, 110C, 110D) or deformable (108) internal envelope covered, lined or formed of a material inert with respect to hydrogen; and in storing hydrogen in said at least one of the cells.

14. Method for storing hydrogen according to Claim 13, **characterized in that** the storage of hydrogen is carried out by flushing therein a purge fluid which said at least one of the cells contains, via a purge pipe (114).

15. Method for storing hydrogen according to Claim 13, **characterized in that** the storage of hydrogen is carried out by increasing therein, in a determined free space existing between the deformable internal envelope (108) and said at least one of the cells, the pressure of a balance gas simultaneously with the increase in pressure of hydrogen in said deformable internal envelope.

16. Method for storing hydrogen according to claim 13, **characterized in that** to be transferred via said transfer line at the determined pressure compatible with its storage in said at least one of the cells, the available hydrogen is either produced by an electrolyser (56) on the gravity based structure or on any other offshore structure or transported by boat (16) from a production site or by a pipeline (18) from the continent, and compressed or decompressed to said determined pressure by the compression/decompression assembly (52).

17. Method for storing hydrogen according to Claim 13, **characterized in that** said determined pressure is between 1 and 1000 bars.

18. Method for storing hydrogen according to claim 14, **characterized in that** the purge fluid is sea water and the purge pipe (114) is in direct contact with the marine environment outside said at least one of the cells via a controllable or non-controllable valve (112).

19. Method for storing hydrogen according to claim 14, **characterized in that** the purge fluid is compressed air or an inert gas heavier than hydrogen and not mixing with it, and the purge pipe (114) is connected to a reservoir (122) of compressed air or pressurized gas via a compressor/decompressor.

20. Method for storing hydrogen according to claim 14, **characterized in that** the purge fluid is pure water and the purge pipe (114) is connected via a controllable or non-controllable valve (112) to another of the storage cells whose transfer pipe (116) is connected to the surface.
